# EUROPEAN PATENT APPLICATION

(11) **EP 4 502 063 A1**
(43) Date of publication of application: **05.02.2025**
(21) Application number: 23781243.3
(22) Date of filing: 23.03.2023
(51) Int. Cl.: C08L 69/00, C08L 83/10, C08L 67/00, C08L 25/12, C08K 5/3475

(54) **THERMOPLASTIC RESIN COMPOSITION AND MOLDED ARTICLE MANUFACTURED FROM SAME**

(30) Priority: 31.03.2022 KR 20220040676
(71) Applicant: LOTTE CHEMICAL CORPORATION, Seoul 05551 (KR)
(72) Inventor: KIM, In-Chol, Uiwang-si, Gyeonggi-do 16073 (KR); RYOO, Heekyoung, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2023/003901
(87) International publication number: WO 2023/191387

(57) **Abstract**

The present invention relates to a thermoplastic resin composition and a molded article manufactured therefrom, the thermoplastic resin composition including: (A) a polycarbonate resin; (B) a polysiloxane-polycarbonate copolymer resin; (C) a siloxane modified polyester; (D) a syndiotactic polystyrene; and (E) a benzotriazole-based ultraviolet (UV) stabilizer.

## Description

### [Technical Field]

A thermoplastic resin composition and a molded article manufactured therefrom are disclosed.

### [Background Art]

Thermoplastic resins have a lower specific gravity than glass or metal and also, advantages of excellent moldability and impact resistance and the like. With the recent trend of lower cost, larger size, lighter electrical and electronic products, plastic products using the thermoplastic resins have rapidly replaced conventional glass or metal products and are more widely used from the electrical and electronic products to automobile parts.

Among the thermoplastic resins, a polycarbonate (PC) resin has excellent impact resistance, heat resistance, strength, etc. and thus is variously applied to electrical and electronic products and vehicle parts. In addition, a colorant may be introduced into the polycarbonate resin to achieve aesthetics of vehicles.

However, because the polycarbonate resin basically has low scratch resistance, in order to use it to the vehicle parts, it is necessary to conduct postprocessing such as surface treatment, coating, or the like, which may cause additional problems, such as increased production costs, environment pollution, and the like.

In order to improve the above problems, there has been an attempt to introduce an acrylate-based copolymer component thereinto to improve scratch performance of the polycarbonate resin but is a problem of deteriorating optical properties and mechanical properties due to low compatibility between the polycarbonate resin and the acrylate-based copolymer component and a large refractive index difference between the polycarbonate resin and the acrylate-based copolymer component.

In addition, there has been another attempt to introduce a silicone-based surface modifier thereinto to improve scratch characteristics of the polycarbonate resin, which also is still far short of realizing a color emphasizing the aesthetics, especially piano black due to low compatibility between the polycarbonate resin and the silicone-based surface modifier.

In order to solve this problem, there is another attempt to use a silicone modified polycarbonate resin as the polycarbonate resin to secure sufficient compatibility between the silicone modified polycarbonate resin and the silicone-based surface modifier, which may realize the piano black color, and achieve satisfactory scratch performance but still has another problem of deteriorating weather resistance due to the silicon (Si) component.

### [Disclosure]

### [Description of the Drawings]

In order to overcome the problem, the present invention provides a thermoplastic resin composition capable of achieving excellent coloring properties to the extent of realizing the piano black as well as securing excellent scratch resistance, impact resistance, and weather resistance and a molded article manufactured therefrom.

According to an embodiment, provided is a thermoplastic resin composition including: (A) a polycarbonate resin; (B) a polysiloxane-polycarbonate copolymer resin; (C) a siloxane-modified polyester; (D) a syndiotactic polystyrene; and (E) a benzotriazole-based ultraviolet (UV) stabilizer.

The thermoplastic resin composition may include 100 parts by weight of a base resin including (A) 50 to 90 wt% of the polycarbonate resin; and (B) 10 to 50 wt% of the polysiloxane-polycarbonate copolymer resin, (C) 1 to 7 parts by weight of the siloxane-modified polyester; (D) 0.5 to 5 parts by weight of the syndiotactic polystyrene; and (E) 0.5 to 5 parts by weight of the benzotriazole-based UV stabilizer.

The (A) polycarbonate resin may have a weight average molecular weight of 10,000 to 100,000 g/mol.

The (A) polycarbonate resin may be a bisphenol-A based polycarbonate resin.

The (B) polysiloxane-polycarbonate copolymer resin may include a polycarbonate block and a polysiloxane block, and the polysiloxane block may include a structural unit represented by Chemical Formula 2: 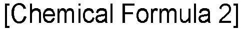 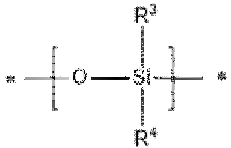 wherein, in Chemical Formula 2, R³ and R⁴ are the same or different, and are a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and are a hydrogen atom, or a substituted or unsubstituted C1 to C20 alkyl group).

The (B) polysiloxane-polycarbonate copolymer resin may include 1 to 50 wt% of the polysiloxane block.

The (B) polysiloxane-polycarbonate copolymer resin may have a weight average molecular weight of 15,000 to 50,000 g/mol.

The (C) siloxane-modified polyester may include a structural unit represented by Chemical Formula 3:

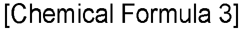

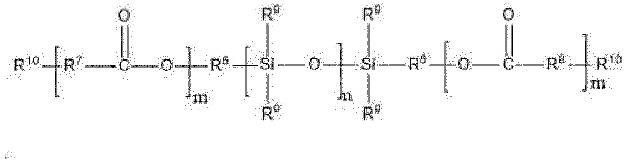

In Chemical Formula 3, R⁵, R⁶, R⁷, and R⁸ are each independently a C1 to C5 alkylene group, R⁹ is a C1 to C4 alkyl group or a phenyl group, R¹⁰ is hydrogen, a hydroxyl group, or a methyl group, and m and n are each independently an integer of 1 or more.

In an embodiment, in Chemical Formula 3, R⁵ and R⁶ may each be - (CH₂)₃-, R⁷ and R⁸ may each be -(CH₂)₅-, R⁹ may be a methyl group, and m and n may be integers greater than or equal to 1 that satisfy m:n = 18:30.

A syndiotactic degree of the (D) syndiotactic polystyrene may be 97 to 100%.

The thermoplastic resin composition may further include at least one additive selected from a flame retardant, a nucleating agent, a coupling agent, glass fiber, a plasticizer, a lubricant, a mineral filler, an antibacterial agent, a release agent, a heat stabilizer, an antioxidant, and an antistatic agent.

Meanwhile, a molded article manufactured from a thermoplastic resin composition according to an embodiment can be provided.

The molded article may have a notched Izod impact strength of greater than or equal to 30 kgf cm/cm at 1/4 inch thickness as measured in accordance with ASTM D256.

The molded article may have a brightness change (△L) of less than or equal to 4.0 before and after scratch resistance evaluation as measured using Scratch Hardness Tester 430 P-I of Erichsen Inc.

The molded article may have a color change (ΔE) of less than or equal to 3.0 before and after the weather resistance evaluation, measured by irradiating the product with 2,500 KJ of energy using a xenon-arc accelerated weather resistance tester according to SAE J 1960.

The thermoplastic resin composition according to an embodiment and a molded article manufactured therefrom have excellent scratch resistance, impact resistance, and weather resistance, and excellent coloring properties.

### [Best Mode]

Hereinafter, embodiments of the present invention are described in detail. However, these embodiments are exemplary, and this disclosure is not limited thereto.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, a weight average molecular weight is measured using gel permeation chromatography (GPC) with a 1200 series made by Agilent Technologies Inc. after dissolving the powder sample in an appropriate solvent (the standard sample is Shodex polystyrene).

According to an embodiment, provided is a thermoplastic resin composition including (A) a polycarbonate resin; (B) a polysiloxane-polycarbonate copolymer resin; (C) a siloxane-modified polyester; (D) a syndiotactic polystyrene; and (E) a benzotriazole-based ultraviolet (UV) stabilizer.

Hereinafter, each component of the thermoplastic resin composition is described in detail.

### (A) Polycarbonate Resin

The (A) polycarbonate (PC) resin is a polyester having a carbonate bond, but has no particular limit in its type, and may include any polycarbonate resin usable in the resin composition field.

For example, the polycarbonate resin may be prepared by reacting a diphenol compound represented by Chemical Formula 1 with a compound selected from phosgene, halogen acid esters, carbonate esters, and a combination thereof.

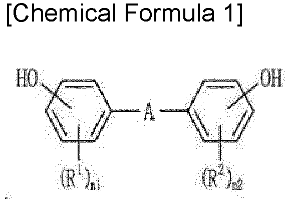

In Chemical Formula 1,
A is a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, a linking group selected from C=O, S, and SO₂, R¹ and R² are each independently a substituted or unsubstituted C1 to C30 alkyl group or a substituted or unsubstituted C6 to C30 aryl group, and n1 and n2 are each independently an integer ranging from 0 to 4.

Two or more types of the diphenols represented by Chemical Formula 1 may be combined to constitute a repeating unit of the polycarbonate resin.

Specific examples of the diphenols may include hydroquinone, resorcinol, 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The (A) polycarbonate resin may be a mixture of copolymers obtained using two or more types of diphenols. Additionally, the polycarbonate resin may be linear polycarbonate resin, branched polycarbonate resin, polyester carbonate copolymer resin, and the like.

A specific example of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with diphenols and a carbonate. The polyester carbonate copolymer resin may be prepared by reacting a difunctional carboxylic acid with diphenols and carbonate, and the carbonate used here may be a diaryl carbonate such as diphenyl carbonate or ethylene carbonate.

The (A) polycarbonate resin may have a weight average molecular weight of 10,000 to 100,000 g/mol, for example 14,000 to 50,000 g/mol. When the weight average molecular weight of the polycarbonate resin is within the above range, excellent impact resistance and fluidity can be obtained.

The (A) polycarbonate resin may be included in an amount of 50 to 90 wt%, for example 50 to 70 wt%, for example 60 to 90 wt%, for example 70 to 90 wt% based on 100 wt% of the base resin including the (A) polycarbonate resin and the (B) polysiloxane-polycarbonate copolymer resin described later. Within the above weight range, the thermoplastic resin composition and the molded article manufactured therefrom can exhibit excellent appearance and mechanical strength.

The (A) polycarbonate resin may have a melt flow index of 5 to 80 g/10 min, for example 10 to 70 g/10 min, as measured at 300°C and 1.2 kg load according to ASTM D1238. When a polycarbonate resin having a melt flow index in the above range is used, the thermoplastic resin composition and molded article manufactured therefrom can exhibit excellent moldability and excellent impact resistance.

Meanwhile, the (A) polycarbonate resin can be used by mixing two or more polycarbonate resins with different weight average molecular weights or melt flow indices. By using a mixture of polycarbonate resins of different weight average molecular weights or melt flow indices, it is easy to adjust the thermoplastic resin composition to have the desired fluidity.

### (B) Polysiloxane-polycarbonate Copolymer Resin

The (B) polysiloxane-polycarbonate copolymer resin may be used with the (A) polycarbonate resin and the (C) siloxane-modified polyester to be described later to improve compatibility of the components in the thermoplastic resin composition.

Conventionally, in order to improve scratch resistance of the polycarbonate resin composition, the silicone-based surface modifier was added to the polycarbonate resin, which may improve scratch resistance but had a problem of deteriorating mechanical properties due to low compatibility between the polycarbonate resin and the silicone-based surface modifier or lowering coloring properties, thereby failing in realizing a high-black color such as piano black.

The present invention solves the problem by including the (B) polysiloxane-polycarbonate copolymer resin to the thermoplastic resin composition including the polycarbonate resin as a main component to improve compatibility between the polycarbonate resin (component (A)) and the siloxane-modified polyester (component (C)).

The (B) polysiloxane-polycarbonate copolymer resin may include a polycarbonate block and a polysiloxane block.

The polycarbonate block may include the same carbonate structural units as included in the aforementioned (A) polycarbonate resin.

The polysiloxane block may include a structural unit represented by Chemical Formula 2.

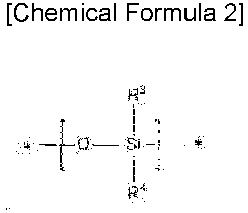

In Chemical Formula 2, R³ and R⁴ are the same or different, and may be a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and are a hydrogen atom, or a substituted or unsubstituted C1 to C20 alkyl group).

The polysiloxane block may be included in an amount of 1 to 50 wt%, for example 1 to 40 wt%, for example 1 to 30 wt%, for example 1 to 20 wt%, for example 1 to 10 wt% based on 100 wt% of the polysiloxane-polycarbonate copolymer resin, but is not limited thereto.

By including the polysiloxane block in the above weight range in the polysiloxane-polycarbonate copolymer resin, impact resistance of the thermoplastic resin composition and the molded article manufactured therefrom may be improved, and processing such as extrusion and injection molding may be easy.

The (B) polysiloxane-polycarbonate copolymer resin may have a weight average molecular weight of 15,000 to 50,000 g/mol, for example 15,000 to 30,000 g/mol. Within the above range, the thermoplastic resin composition and the molded article manufactured therefrom may have excellent impact resistance.

The (B) polysiloxane-polycarbonate copolymer resin may be included in an amount of 10 to 50 wt%, for example 30 to 50 wt%, for example 10 to 40 wt%, for example 10 to 30 wt% based on 100 wt% of the base resin. Within the above range, the thermoplastic resin composition and the molded article manufactured therefrom may have excellent impact resistance and coloring properties.

### (C) Siloxane-modified Polyester

The (C) siloxane-modified polyester may improve the scratch resistance and coloring properties of the thermoplastic resin composition according to the present invention.

The (C) siloxane-modified polyester may include a structural unit represented by Chemical Formula 3:

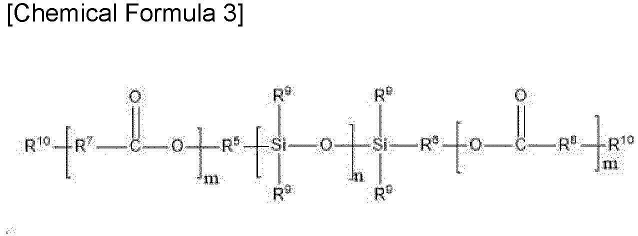

In Chemical Formula 3, R⁵, R⁶, R⁷, and R⁸ are each independently a C1 to C5 alkylene group, R⁹ is a C1 to C4 alkyl group or a phenyl group, R¹⁰ is hydrogen, a hydroxyl group, or a methyl group, m and n are each independently an integer of 1 or more.

In an embodiment, in Chemical Formula 3, R⁵ and R⁶ may each be - (CH₂)₃-, R⁷ and R⁸ may each be -(CH₂)₅-, R⁹ may be a methyl group, and m and n may be integers greater than or equal to 1 that satisfy m:n = 18:30.

The (C) siloxane-modified polyester may be included in an amount of 1 to 7 parts by weight, for example may be included in an amount of 2 to 5 parts by weight based on 100 parts by weight of the base resin including (A) and (B). Within the above amount range, the scratch resistance and coloring properties of the thermoplastic resin composition and the molded article manufactured therefrom may be improved.

### (D) Syndiotactic Polystyrene

The (D) syndiotactic polystyrene may improve the impact resistance of the thermoplastic resin composition according to the present invention.

Polystyrene is generally divided into atactic, isotactic, and syndiotactic structures depending on the position of the benzene ring. Atactic polystyrene has an irregular arrangement of the benzene rings, while isotactic polystyrene has a structure in which the benzene rings are arranged on one side of the polymer backbone. In contrast, syndiotactic polystyrene has a structure in which benzene rings are arranged in a regular, alternating pattern.

Among these, syndiotactic polystyrene may be prepared using a catalyst system including a styrene monomer, a metallocene catalyst, and a cocatalyst. The metallocene catalyst has a structure in which one or two cycloalkane dienyl groups (cyclopentadienyl groups, indenyl groups, fluorenyl groups and derivatives thereof) are linked to a Group IV transition metal complex of the periodic table, such as Ti, Zr, or Hf.

As a prior art for polystyrene having high stereoregularity, high melting point and excellent molecular weight distribution, U.S. Patent No. 6,010,974 discloses a new alkyl-bridged dinuclear metallocene catalyst, a silyl-bridged dinuclear metallocene catalyst, and a method for polymerizing styrene monomer using an alkyl-silyl bridged dinuclear metallocene catalyst, and U.S. Patent No. 6,284,700 discloses syndiotactic polystyrene using a catalyst system consisting of a metallocene catalyst and a cocatalyst. The disclosures in these patents are incorporated by reference herein in their entirety by reference.

A syndiotactic degree of the (D) syndiotactic polystyrene may be 97 to 100%.

The (D) syndiotactic polystyrene may be included in an amount of 0.5 to 5 parts by weight, for example 1 to 5 parts by weight, for example 1 to 3 parts by weight based on 100 parts by weight of the base resin. Within the above weight range, the thermoplastic resin composition and the molded article manufactured therefrom can have excellent impact resistance.

### (E) Benzotriazole-based Ultraviolet (UV) Stabilizer

The (E) benzotriazole-based UV stabilizer prevents decomposition and discoloration due to ultraviolet rays of the thermoplastic resin composition according to the present invention, thereby improving the weather resistance.

The type of benzotriazole-based UV stabilizer is not particularly limited, and various commercially available benzotriazole-based UV stabilizers may be used.

The benzotriazole-based UV stabilizer may be included in an amount of 0.5 to 5 parts by weight, for example 1 to 5 parts by weight, for example 1 to 4 parts by weight, for example 2 to 4 parts by weight based on 100 parts by weight of the base resin. Within the above weight range, the thermoplastic resin composition and the molded article manufactured therefrom may have excellent weather resistance.

### (F) Other Additives

A thermoplastic resin composition according to an embodiment may further include, in addition to the components (A) to (E), one or more additives necessary to balance the properties under conditions of maintaining excellent scratch resistance, weather resistance, impact resistance, and coloring properties, or depending on the final use of the thermoplastic resin composition.

Specifically, the additive may include at least one additive selected from a flame retardant, a nucleating agent, a coupling agent, glass fiber, a plasticizer, a lubricant, a mineral filler, an antibacterial agent, a release agent, a heat stabilizer, an antioxidant, and an antistatic agent.

These additives may be appropriately included within a range that does not impair the physical properties of the thermoplastic resin composition, and may specifically be included in an amount of 20 parts by weight or less based on 100 parts by weight of the base resin, but are not limited thereto.

The thermoplastic resin composition according to the present invention can be prepared by a known method for preparing a thermoplastic resin composition.

For example, the thermoplastic resin composition according to the present invention can be prepared in a form of pellets by mixing the components of the present invention and other additives and then melting and kneading them in an extruder.

A molded article according to an embodiment of the present invention may be manufactured from the aforementioned thermoplastic resin composition.

A molded article manufactured by appropriately adding a mixture of quinone-based dyes exhibiting a black color to the thermoplastic resin composition described above can realize a piano black color, which is a highquality, deep black color, due to the synergistic effect of each component of the thermoplastic resin composition.

The molded article may have a notched Izod impact strength of greater than or equal to 30 kgf cm/cm at 1/4 inch thickness as measured in accordance with ASTM D256.

The molded article may have a brightness change (△L) of less than or equal to 4.0 before and after scratch resistance evaluation as measured using Scratch Hardness Tester 430 P-I of Erichsen Inc.

The molded article may have a color change (ΔE) of less than or equal to 3.0 before and after the weather resistance evaluation, measured by irradiating the product with 2,500 KJ of energy using a xenon-arc accelerated weather resistance tester according to SAE J 1960.

### [Mode for Invention]

Hereinafter, preferred embodiments of the present invention will be described. However, the following example is only a preferred example of the present invention, and the present invention is not limited by the following example.

### Examples 1 to 6 and Comparative Examples 1 to 6

The thermoplastic resin compositions according to Examples 1 to 6 and Comparative Examples 1 to 6 were respectively prepared according to each component content ratio shown in Table 1.

A black quinone-based dye mixture was added to components shown in Table 1 in an amount of 0.5 parts by weight based on 100 parts by weight of a base resin and then, dry-mixed, quantitatively and continuously fed into a feed section of a twin-screw extruder (L/D = 29, diameter = 45 mm), and melted/kneaded. Herein, a barrel temperature of the twin-screw extruder was set at about 280°C. Subsequently, each of the thermoplastic resin compositions pelleted from the twin-screw extruder was dried at about 80°C for about 4 hours and then, injection-molded into specimens for measuring physical properties by using a 6 oz injection molding machine at a cylinder temperature of about 280°C and a mold temperature of about 60°C.

In Table 1, (A) and (B) exhibit wt% of each component based on 100 wt% of the base resin, and (C), (D), and (E) exhibit its parts by weight based on 100 parts by weight of the base resin ((A)+(B)).

**(Table 1)**

| | Exam ple 1 | Exam ple 2 | Exam ple 3 | Exam ple 4 | Exam ple 5 | Exam ple 6 | Comp arativ e Exam ple 1 | Comp arativ e Exam ple 2 | Comp arativ e Exam ple 3 | Comp arativ e Exam ple 4 | Comp arativ e Exam ple 5 | Comp arativ e Exam ple 6 |
|---|---|---|---|---|---|---|---|---|---|---|---|---|
| (A) | 50 | 70 | 90 | 70 | 70 | 70 | 100 | 70 | 70 | 70 | 70 | 70 |
| (B) | 50 | 30 | 10 | 30 | 30 | 30 | 0 | 30 | 30 | 30 | 30 | 30 |
| (C) | 2 | 2 | 2 | 5 | 2 | 2 | 2 | 0 | 2 | 2 | 10 | 2 |
| (D) | 1 | 1 | 1 | 1 | 3 | 1 | 1 | 1 | 0 | 1 | 1 | 10 |
| (E) | 2 | 2 | 2 | 2 | 2 | 4 | 2 | 2 | 2 | 0 | 2 | 2 |

Each component in Table 1 is described as follows.

### (A) Polycarbonate resin

A bisphenol-A linear polycarbonate resin having a weight average molecular weight of about 25,000 g/mol was used.

### (B) Polysiloxane-polycarbonate copolymer resin

A polysiloxane-polycarbonate copolymer resin having a weight average molecular weight of about 24,000 g/mol and including a polycarbonate block of about 97 to 94 wt% and a polysiloxane block of about 3 to 6 wt% was used.

### (C) Siloxane-modified polyester

H-Si 6441 P of Evonik Industries was used.

### (D) Syndiotactic polystyrene

130ZC of Idemitsu Kosan Co., Ltd. was used.

### (E) Benzotriazole-based ultraviolet (UV) stabilizer

LA-300K of Adeka Corp. was used.

### Experimental Examples

Experiment results are shown in Table 2.
(1) Impact resistance (unit: kgf cm/cm): Notched Izod impact strength was measured for 1/4 inch-thick specimens according to ASTM D256.
(2) Coloring properties: A brightness value (L) was measured in a specular component excluded (SCE) mode by using CM-3700D, Konica Minolta Sensing Inc. The lower the brightness, the better black color, which confirmed the better coloring properties.
(3) Weather resistance: The specimens were irradiated with 2,500 KJ of energy according to SAE J 1960 by using a xenon-arc accelerated weather resistance tester and measured with respect to color changes (ΔE) on the glossy surface before and after the evaluation in the specular component excluded (SCE) mode by using CM-3700D of Konica Minolta Sensing Inc.
(4) Scratch resistance

After 20 times applying scratches to the specimens in a grid pattern at an interval of 2 mm by using a scratch hardness tester 430 P-I made by Erichsen Inc. under the condition of a test tip with a diameter of 1 mm under a load 10 N at a cutting speed 1 m/min, the specimens were measured with respect to brightness changes (ΔL) before and after the scratch evaluation in the specular component excluded (SCE) mode by using CM-3700D of Konica Minolta Sensing Inc. Because the applied scratches generated microcracks on the specimen surface, creating flaws, which increased the brightness of the specimens, the higher brightness changes (ΔL), the more damages due to the scratches, which was judged to lower scratch resistance.

**(Table 2)**

| | Exa mple 1 | Exa mple 2 | Exa mple 3 | Exa mple 4 | Exa mple 5 | Exa mple 6 | Com parat ive Exa mple 1 | Com parat ive Exa mple 2 | Com parat ive Exa mple 3 | Com parat ive Exa mple 4 | Com parat ive Exa mple 5 | Com parat ive Exa mple 6 |
|---|---|---|---|---|---|---|---|---|---|---|---|---|
| Impact strength | 50 | 40 | 35 | 50 | 55 | 35 | 25 | 35 | 10 | 50 | 55 | 20 |
| Brightness (L) | 0.3 | 0.4 | 0.5 | 1.5 | 0.4 | 0.4 | 5.5 | 0.3 | 0.4 | 0.4 | 6.5 | 1.8 |
| Color change (ΔE) | 2.7 | 2.6 | 2.3 | 2.9 | 2.8 | 2.0 | 2.2 | 2.3 | 2.6 | 5.2 | 4.8 | 3.2 |
| Brightness change (ΔL) | 3.2 | 3.5 | 3.8 | 2.3 | 3.5 | 3.5 | 4.0 | 7.8 | 3.5 | 3.5 | 2.5 | 4.8 |

Referring to Tables 1 and 2, when a thermoplastic resin composition was prepared by using a polycarbonate resin, a polysiloxane-polycarbonate copolymer resin, a siloxane-modified polyester, a syndiotactic polystyrene, and a benzotriazole-based ultraviolet (UV) stabilizer in an optimal amount, it was confirmed to implement a thermoplastic resin composition having excellent impact resistance, weather resistance, scratch resistance, and coloring properties and a molded article manufactured therefrom were confirmed.

In particular, the molded articles manufactured from the thermoplastic resin compositions of Examples 1 to 6 maintained excellent properties and simultaneously, had brightness (L) of 2.0 or less and thus exhibited excellent coloring properties to the extent of implementing piano black.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
(A) a polycarbonate resin;
(B) a polysiloxane-polycarbonate copolymer resin;
(C) a siloxane-modified polyester;
(D) a syndiotactic polystyrene; and
(E) a benzotriazole-based ultraviolet (UV) stabilizer.

2. The thermoplastic resin composition of claim 1, wherein
the thermoplastic resin composition includes
100 parts by weight of a base resin including
(A) 50 to 90 wt% of the polycarbonate resin; and
(B) 10 to 50 wt% of the polysiloxane-polycarbonate copolymer resin,
(C) 1 to 7 parts by weight of the siloxane-modified polyester;
(D) 0.5 to 5 parts by weight of the syndiotactic polystyrene; and
(E) 0.5 to 5 parts by weight of the benzotriazole-based UV stabilizer.

3. The thermoplastic resin composition of claim 1, wherein
the (A) polycarbonate resin has a weight average molecular weight of 10,000 to 100,000 g/mol.

4. The thermoplastic resin composition of claim 1, wherein
the (A) polycarbonate resin is a bisphenol-A based polycarbonate resin.

5. The thermoplastic resin composition of claim 1, wherein
the (B) polysiloxane-polycarbonate copolymer resin includes a polycarbonate block and a polysiloxane block, and the polysiloxane block includes a structural unit represented by Chemical Formula 2: 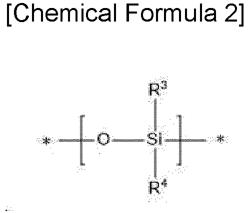
wherein, in Chemical Formula 2, R³ and R⁴ are the same or different, and hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and are a hydrogen atom, or a substituted or unsubstituted C1 to C20 alkyl group).

6. The thermoplastic resin composition of claim 5, wherein
the (B) polysiloxane-polycarbonate copolymer resin includes 1 to 50 wt% of the polysiloxane block.

7. The thermoplastic resin composition of claim 1, wherein
the (B) polysiloxane-polycarbonate copolymer resin has a weight average molecular weight of 15,000 to 50,000 g/mol.

8. The thermoplastic resin composition of claim 1, wherein
the (C) siloxane-modified polyester is represented by Chemical Formula 3: 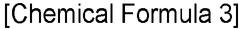 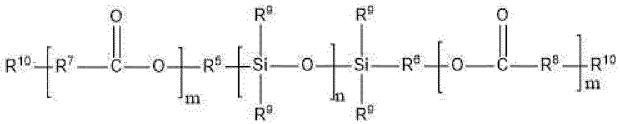
wherein, in Chemical Formula 3, R⁵, R⁶, R⁷, and R⁸ are each independently a C1 to C5 alkylene group, R⁹ is a C1 to C4 alkyl group or a phenyl group, R¹⁰ is hydrogen, a hydroxyl group, or a methyl group, and m and n are each independently an integer of 1 or more.

9. The thermoplastic resin composition of claim 8, wherein
in Chemical Formula 3, R⁵ and R⁶ are each -(CH₂)₅-, R⁷ and R⁸ are each -(CH₂)₅-, R⁹ is a methyl group, and m and n are integers greater than or equal to 1 that satisfy m:n = 18:30.

10. The thermoplastic resin composition of claim 1, wherein
a syndiotactic degree of the (D) syndiotactic polystyrene is 97 to 100%.

11. The thermoplastic resin composition of claim 1, wherein
the thermoplastic resin composition includes at least one additive selected from a flame retardant, a nucleating agent, a coupling agent, glass fiber, a plasticizer, a lubricant, a mineral filler, an antibacterial agent, a release agent, a heat stabilizer, an antioxidant, and an antistatic agent.

12. A molded article manufactured from the thermoplastic resin composition of any one of claim 1 to claim 11.

13. The molded article of claim 12, wherein
the molded article has a notched Izod impact strength of greater than or equal to 30 kgf cm/cm at 1/4 inch thickness as measured in accordance with ASTM D256.

14. The molded article of claim 12, wherein
the molded article has a brightness change (△L) of less than or equal to 4.0 before and after scratch resistance evaluation as measured using Scratch Hardness Tester 430 P-I of Erichsen Inc.

15. The molded article of claim 12, wherein
the molded article has a color change (ΔE) of less than or equal to 3.0 before and after the weather resistance evaluation, measured by irradiating the product with 2,500 KJ of energy using a xenon-arc accelerated weather resistance tester according to SAE J 1960.
